# EUROPÄISCHE PATENTANMELDUNG

(11) **EP 4 726 571 A1**
(43) Veröffentlichungstag der Anmeldung: **15.04.2026**
(21) Anmeldenummer: 24206212.3
(22) Anmeldetag: 11.10.2024
(51) Int. Cl.: G06F 16/28, G06F 16/31

(54) **VORRICHTUNG UND COMPUTERIMPLEMENTIERTES VERFAHREN ZUR BESTIMMUNG EINER EINBETTUNG ZUR INDEXIERUNG EINER ZU INDEXIERENDE MESSUNG INSBESONDERE IN EINER DATENBANK**

(71) Anmelder: Robert Bosch GmbH, 70442 Stuttgart (DE)
(72) Erfinder: Gerwinn, Sebastian, 71229 Leonberg (DE); Schiegg, Martin, 70825 Korntal-Muenchingen (DE); Eivazi, Anna, 71272 Renningen (DE)

(57) **Zusammenfassung**

Vorrichtung und computerimplementiertes Verfahren zur Bestimmung einer Einbettung zur Indexierung einer zu indexierende Messung insbesondere in einer Datenbank, wobei ein Datensatz bereitgestellt wird, wobei der Datensatz (304) Paare (306) von je einer Messung (308) und je einem Text (310) umfasst, wobei die Messungen (308) jeweils Sensordaten, insbesondere eine Zeitreihe von Sensordaten umfassen, wobei der Text (310) aus dem jeweiligen Paar (306) wenigstens eine Eigenschaft der Sensordaten in der Messung (308) aus dem jeweiligen Paar (306) beschreibt, wobei ein erster Kodierer (202) bereitgestellt wird, wobei ein zweiter Kodierer (302) bereitgestellt wird, wobei der erste Kodierer (202) dazu ausgebildet ist, die Messung (308) aus einem jeweiligen Paar (306) auf eine Einbettung (312) der Messung (308) in einem Einbettungsraum (206) abzubilden, wobei der zweite Kodierer (302) dazu ausgebildet ist, den Text (310) aus dem jeweiligen Paar (306) auf eine Einbettung (314) des Texts (310) im Einbettungsraum (206) abzubilden, wobei der erste Kodierer (202) und der zweite Kodierer (302) auf dem Datensatz (304) abhängig von einem Abstand zwischen der Einbettung (312) der Messung (308) und der Einbettung (314) des Textes (310) aus dem jeweiligen Paar (306) trainiert werden, die Messung (308) aus dem jeweiligen Paar (306) auf die Einbettung (312) der Messung (308) und den Text (310) aus dem jeweiligen Paar (306) auf die Einbettung (314) des Textes (310) abzubilden, wobei die zu indexierende Messung mit dem trainierten ersten Kodierer (202) auf die Einbettung der zu indexierenden Messung abgebildet wird.

## Beschreibung

### Stand der Technik

Die Erfindung betrifft eine Vorrichtung und ein computerimplementiertes Verfahren zur Bestimmung einer Einbettung zur Indexierung einer zu indexierende Messung insbesondere in einer Datenbank.

In einer Datenbank gespeicherte Messungen von Sensordaten können in der Datenbank nach einer Startzeitpunkt oder einem Endzeitpunkt einer Erfassung der Sensordaten indiziert sein. Die Messungen können auch nach bestimmten Eigenschaften, wie z.B. vier Maxima in den Werten der Sensordaten in der Messung, Anzahl der Maxima, linearer Trend vorhanden/nicht vorhanden, indiziert sein.

Die Eigenschaften können für die Messungen aus einer bestehenden Datenbank bestimmt werden. Die Eigenschaft der Sensordaten aus einer jeweiligen Messung oder die Eigenschaften der Sensordaten aus einer jeweiligen Messung können als der jeweiligen Messung zugeordnete Metadaten z.B. in der Datenbank gespeichert werden. Dadurch sind Messungen mit einer bestimmten Eigenschaft in der Datenbank rasch auffindbar. Das Bestimmen der Eigenschaften der Messungen aus einer bestehenden Datenbank ist allerdings sehr zeitaufwändig. Die Suche nach bestimmten Eigenschaften ist auf die zuvor bestimmten Eigenschaften beschränkt.

### Offenbarung der Erfindung

Ein computerimplementiertes Verfahren zur Bestimmung einer Einbettung zur Indexierung einer zu indexierende Messung insbesondere in einer Datenbank sieht vor, dass ein Datensatz bereitgestellt wird, wobei der Datensatz Paare von je einer Messung und je einem Text umfasst, wobei die Messungen jeweils Sensordaten, insbesondere eine Zeitreihe von Sensordaten umfassen, wobei der Text aus dem jeweiligen Paar wenigstens eine Eigenschaft der Sensordaten in der Messung aus dem jeweiligen Paar beschreibt, wobei ein erster Kodierer bereitgestellt wird, wobei ein zweiter Kodierer bereitgestellt wird, wobei der erste Kodierer dazu ausgebildet ist, die Messung aus einem jeweiligen Paar auf eine Einbettung der Messung in einem Einbettungsraum abzubilden, wobei der zweite Kodierer dazu ausgebildet ist, den Text aus dem jeweiligen Paar auf eine Einbettung des Texts im Einbettungsraum abzubilden, wobei der erste Kodierer und der zweite Kodierer auf dem Datensatz abhängig von einem Abstand zwischen der Einbettung der Messung und der Einbettung des Textes aus dem jeweiligen Paar trainiert werden, die Messung aus dem jeweiligen Paar auf die Einbettung der Messung und den Text aus dem jeweiligen Paar auf die Einbettung des Textes abzubilden, wobei die zu indexierende Messung mit dem trainierten ersten Kodierer auf die Einbettung der zu indexierenden Messung abgebildet wird. Die Einbettung, auf die der erste Kodierer die zu indexierende Messung abbildet, liegt aufgrund des Trainings der Kodierer nahe bei Einbettungen anderer im Training verwendeter Messungen. Die anderen Messungen liegen aufgrund des Trainings der Kodierer nahe bei Einbettungen von Text, der die wenigstens eine Eigenschaft der Sensordaten aus der jeweiligen im Training verwendeten Messung beschreibt. Die für die zu indexierende Messung bestimmte Einbettung zur Indexierung der zu indexierenden Messung liegt daher nahe den Einbettungen von Text, der sehr wahrscheinlich wenigstens eine Eigenschaft der Sensordaten in der zu indexierenden Messung beschreibt. Die mit der Einbettung zur Indexierung indexierte Messung ist insbesondere in der Datenbank ohne Kenntnis über einen Text, der wenigstens eine Eigenschaft der indexierten Messung beschreibt, und ohne eine Berechnung der Einbettung der indexierten Messung zum Zeitpunkt einer Suche abhängig von Text, der wenigstens einer Eigenschaft der Sensordaten, die eine gesuchte Messung aufweisen soll, auffindbar. Beispielsweise ist die indexierte Messung in einer Suche nach einer Anomalie in den Sensordaten auffindbar, indem nach Text gesucht wird, der wenigstens eine Eigenschaft der Anomalie beschreibt.

Die Einbettung repräsentiert die zu indexierende Messung in einem Einbettungsraum. Die Einbettung ist z.B. eine numerische Repräsentation, welche die zu indexierende Messung im Einbettungsraum repräsentiert. Der Einbettungsraum ist ein mehrdimensionaler Raum. Die zu indexierende Messung wird im Einbettungsraum verdichtet repräsentiert, d.h., die Einbettung weist einen geringeren Speicherbedarf auf, als der zum Speichern der zu indexierenden Messung selbst benötigte Speicherbedarf. Die Einbettung ist z.B. eine neuronale Netzwerkeinbettung. Die Einbettung ist z.B. ein Vektor.

Im Training wird die wenigstens eine Eigenschaft der im Training verwendeten Messungen bereitgestellt.

Beispielsweise wird für ein Paar der Paare der Text im Paar in einer Nutzereingabe erfasst. Das bedeutet, die wenigstens eine Eigenschaft der Messung im Paar wird von einem Nutzer, z.B. einem menschlichen Experten, bereitgestellt.

Beispielsweise wird für ein Paar der Paare wenigstens ein Teil des Texts im Paar abhängig von der Messung im Paar mit einem Extrahierer bestimmt wird, wobei der Extrahierer ausgebildet ist, den wenigstens einen Teil des Texts im Paar aus den Sensordaten aus der Messung aus dem Paar zu extrahieren, wobei der wenigstens eine Teil des Texts die Eigenschaft der Sensordaten aus der Messung aus dem Paar umfasst. Der Extrahierer ist z.B. ein feature extractor, der ausgebildet ist, die wenigstens eine Eigenschaft als ein feature, d.h. ein Merkmal, aus den Sensordaten zu bestimmen.

Es kann vorgesehen sein, dass ein Satz von Extrahierern bereitgestellt wird, wobei die Extrahierer jeweils ausgebildet sind, wenigstens einen Teil des Texts im Paar aus den Sensordaten aus der Messung aus dem Paar zu extrahieren, wobei der Extrahierer aus dem Satz automatisiert insbesondere zufällig ausgewählt wird.

Es kann vorgesehen sein, dass mehrere Teile des Texts automatisiert mit unterschiedlichen Extrahierern aus dem Satz bestimmt werden.

Beispielsweise wird für ein Paar der Paare wenigstens ein Teil des Texts im Paar abhängig von der Messung im Paar mit einem Grundmodell bestimmt wird, wobei das Grundmodell ausgebildet ist, den wenigstens einen Teil des Texts im Paar aus den Sensordaten aus der Messung aus dem Paar zu erzeugen, wobei der wenigstens eine Teil des Texts die Eigenschaft der Sensordaten aus der Messung aus dem Paar umfasst. Das Grundmodell ist z.B. ein large language model.

Es kann vorgesehen sein, dass für eine Messung aus einem Paar der Paare eine Logdatei bereitgestellt wird, wobei die Logdatei eine Beschreibung eines Ereignisses umfasst, das bei der Erfassung der Messung auftrat, wobei wenigstens ein Teil des Texts im Paar abhängig von der Logdatei bestimmt wird, wobei der wenigstens eine Teil des Texts die Beschreibung des Ereignisses als die Eigenschaft umfasst.

Es kann vorgesehen sein, dass die Einbettung zur Indexierung der zu indexierende Messung und die zu indexierende Messung miteinander assoziiert insbesondere in der Datenbank gespeichert werden. Damit ist die Messung anhand der mit der Messung assoziierten Einbettung auffindbar.

Es kann vorgesehen sein, dass ein Satz von Messungen bereitgestellt wird, wobei für die Messungen aus dem Satz von Messungen die Einbettung der jeweiligen Messung bestimmt wird, wobei eine Abfrage erfasst wird, wobei die Abfrage einen Text umfasst, wobei der Text eine Eigenschaft von Sensordaten umfasst, wobei der Text aus der Abfrage mit dem zweiten Kodierer auf eine Einbettung des Texts aus der Abfrage im Einbettungsraum abgebildet wird, wobei eine Messung aus dem Satz von Messungen abhängig vom Abstand zwischen der Einbettung des Texts aus der Abfrage und der für die Messung aus dem Satz der Messungen bestimmten Einbettung ausgewählt wird. Dadurch wird eine Messung aufgefunden, die Sensordaten mit der im Text beschriebenen Eigenschaft enthält.

Ein Vorrichtung zur Bestimmung einer Einbettung zur Indexierung einer zu indexierende Messung insbesondere in einer Datenbank, sieht vor, dass die Vorrichtung wenigstens einen Prozessor und wenigstens einen Speicher umfasst, wobei der wenigstens eine Prozessor ausgebildet ist, Instruktionen auszuführen, bei deren Ausführung durch den wenigstens einen Prozessor die Vorrichtung das Verfahren ausführt, wobei der wenigstens eine Speicher die Instruktionen umfasst.

Diese Vorrichtung weist die Vorteile des Verfahrens zum Indexieren der Messungen auf.

Ein Computerprogramm zur Bestimmung einer Einbettung einer zu indexierende Messung sieht vor, dass das Computerprogramm von einem Computer ausführbare Instruktionen umfasst, bei deren Ausführung durch den Computer das Verfahren abläuft.

Eine Datenstruktur zur Bestimmung einer Einbettung zur Indexierung einer zu indexierende Messung insbesondere in einer Datenbank sieht vor, dass die Datenstruktur wenigstens ein Datenfeld für einen Datensatz umfasst, wobei der Datensatz Paare von je einer Messung und je einem Text umfasst, wobei die Messungen jeweils Sensordaten, insbesondere eine Zeitreihe von Sensordaten umfassen, wobei der Text aus dem jeweiligen Paar wenigstens eine Eigenschaft der Sensordaten in der Messung aus dem jeweiligen Paar beschreibt, wobei die Datenstruktur wenigstens ein Datenfeld für einen ersten Kodierer und einen zweiten Kodierer umfasst, wobei der erste Kodierer dazu ausgebildet ist, die Messung aus einem jeweiligen Paar auf eine Einbettung der Messung in einem Einbettungsraum abzubilden, wobei der zweite Kodierer dazu ausgebildet ist, den Text aus dem jeweiligen Paar auf eine Einbettung des Texts im Einbettungsraum abzubilden, wobei die Datenstruktur wenigstens ein Datenfeld zum Trainieren des ersten Kodierers und des zweiten Kodierers auf dem Datensatz dazu umfasst, abhängig von einem Abstand zwischen der Einbettung der Messung und der Einbettung des Textes aus dem jeweiligen Paar die Messung aus dem jeweiligen Paar auf die Einbettung der Messung und den Text aus dem jeweiligen Paar auf die Einbettung des Textes abzubilden, wobei die Datenstruktur wenigstens ein Datenfeld für die Einbettung der zu indexierenden Messung umfasst, auf welche die zu indexierende Messung mit dem trainierten ersten Kodierer abgebildet wird.

Weitere Beispiele sind der folgenden Beschreibung und der Zeichnung entnehmbar. In der Zeichnung zeigt:
Fig. 1 eine schematische Darstellung einer Vorrichtung zur Bestimmung einer Einbettung zur Indexierung einer zu indexierende Messung insbesondere in einer Datenbank,
Fig. 2 eine schematische Darstellung eines ersten Kodierers zur Bestimmung einer Einbettung der zu indizierenden Messung,
Fig. 3 eine schematische Darstellung des ersten Kodierers und eines zweiten Kodierers für ein Training des ersten Kodierers,
Fig. 4 ein Flussdiagramm mit Schritten eines Verfahrens zur Bestimmung der Einbettung.

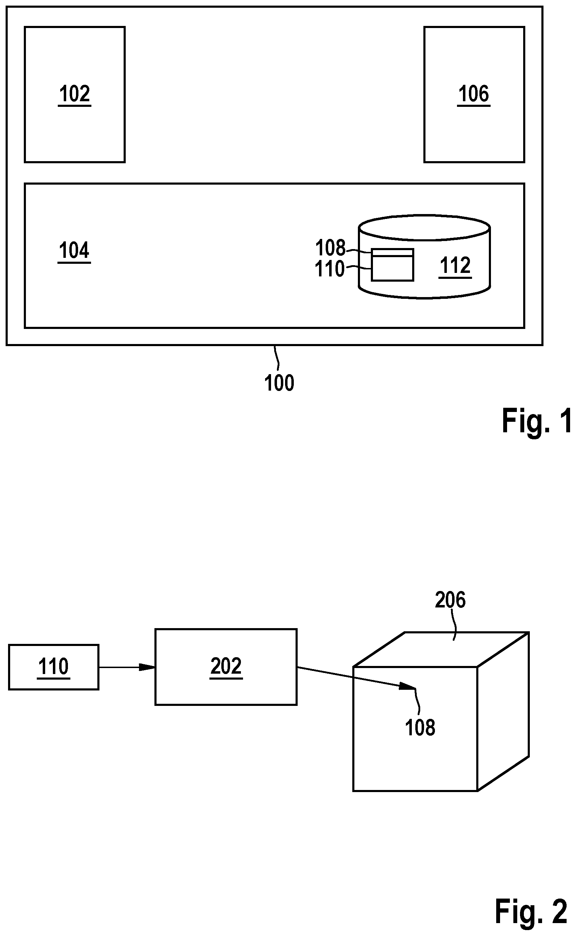

In Figur 1 ist eine Vorrichtung 100 schematisch dargestellt.

Die Vorrichtung 100 umfasst wenigstens einen Prozessor 102 und wenigstens einen Speicher 104. Der wenigstens eine Speicher 104 umfasst z.B. einen volatilen Speicher und einen nicht volatilen Speicher.

Beispielsweise umfasst die Vorrichtung 100 eine Schnittstelle 106. Die Schnittstelle 106 ist ausgebildet, eine Nutzereingabe zu erfassen. Die Schnittstelle 106 ist ausgebildet, eine Messung auszugeben.

Die Vorrichtung 100 ist ausgebildet, ein Verfahren zur Bestimmung einer Einbettung 108 zur Indexierung einer zu indexierenden Messung 110 auszuführen. Im Beispiel ist vorgesehen, die zu indexierende Messung 110 in einer Datenbank 112 zu indexieren.

Der wenigstens eine Speicher 104 umfasst z.B. die Datenbank 112. Die Datenbank 112 ist ausgebildet, die zu indexierende Messungen 110 vor der Indexierung zu speichern. Die Datenbank 112 ist ausgebildet, nach der Indexierung die mit der Einbettung 108 indexierte Messung 110 zu speichern.

Figur 2 stellt einen ersten Kodierer 202 zur Bestimmung der Einbettung 108 in einem Einbettungsraum 206 zur Indexierung der zu indizierenden Messung 110 dar.

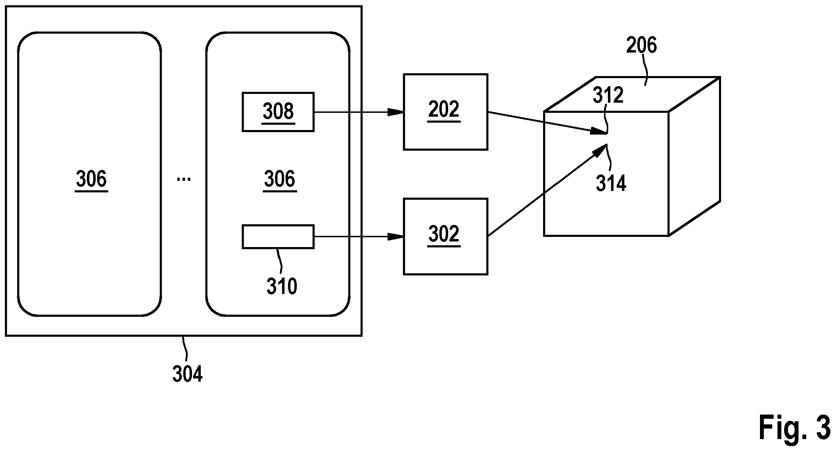

Figur 3 stellt eine schematische Darstellung des ersten Kodierers 202 und eines zweiten Kodierers 302 für ein Training des ersten Kodierers 202 dar.

Das Training basiert auf einem Datensatz 304, der Paare 306 von je einer Messung 308 und je einem Text 310.

Der erste Kodierer 202 ist ausgebildet die Messung 308 aus einem jeweiligen Paar auf eine erste Einbettung 312 im Einbettungsraum 206 abzubilden.

Der zweite Kodierer 302 ist ausgebildet den Text 310 aus einem jeweiligen Paar auf eine zweite Einbettung 314 im Einbettungsraum 206 abzubilden.

Im Training werden der erste Kodierer 202 und der zweite Kodierer 302 dazu trainiert, die Messung 304 und den Text 306 aus dem jeweiligen Paar auf Einbettungen abzubilden, die möglichst nahe beieinander im Einbettungsraum 206 liegen.

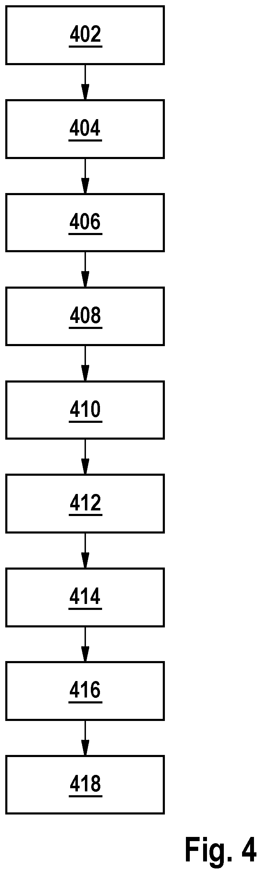

Figur 4 stellt ein Flussdiagramm mit Schritten eines Verfahrens zur Bestimmung der Einbettung 108 zur Indexierung der zu indexierende Messung 110 dar.

Die zu indexierende Messung 310 umfasst Sensordaten, insbesondere eine Zeitreihe von Sensordaten.

Das Verfahren umfasst einen Schritt 402.

Im Schritt 402 wird der Datensatz 304 bereitgestellt.

Der Datensatz 304 umfasst die Paare 306 von je einer Messung 308 und je einem Text 310.

Die Messungen 308 umfassen jeweils Sensordaten, insbesondere eine Zeitreihe von Sensordaten.

Der Text 310 aus dem jeweiligen Paar 306 beschreibt wenigstens eine Eigenschaft der Sensordaten in der Messung 308 aus dem jeweiligen Paar 306.

Beispielsweise ist eine Möglichkeit oder sind mehrere der folgenden Möglichkeiten vorgesehen, um je Paar 306 den Text 310 zu bestimmen, der die wenigstens eine Eigenschaft der Sensordaten in der Messung 308 im jeweiligen Paar beschreibt.

### Möglichkeit 1:

Für ein Paar 306 der Paare wird wenigstens ein Teil des Texts 310 in der Nutzereingabe insbesondere über die Schnittstelle 106 erfasst. Beispielsweise wird die Messung aus dem Paar über die Schnittstelle 106 ausgegeben und die Nutzereingabe angefordert.

### Möglichkeit 2:

Für ein Paar 306 wird wenigstens ein Teil des Texts 310 im Paar 306 abhängig von der Messung 308 im Paar 306 mit einem Extrahierer bestimmt.

Der Extrahierer ist ausgebildet, den wenigstens einen Teil des Texts 310 im Paar 306 aus den Sensordaten aus der Messung 310 aus dem Paar 306 zu extrahieren.

Der wenigstens eine Teil des Texts 310 umfasst die Eigenschaft der Sensordaten aus der Messung 308 aus dem Paar 306.

Der Extrahierer ist z.B. ein Modul, das die Sensordaten, insbesondere die Zeitreihe, als Eingangsgröße nimmt und Werte von Merkmalen der Sensordaten abhängig von den Sensordaten berechnet. Der Extrahierer liefert z.B. abhängig vom Wert und dem Namen des Merkmals einen die Eigenschaft der die Sensordaten beschreibenden Teil des Texts, der den Namen des Merkmals und den Wert umfasst.

Es kann ein Satz von Extrahierern vorgesehen sein, wobei die Extrahierer aus dem Satz je ein Modul darstellen. Ein Beispiel für den Satz von Extrahierern ist tsfresh.

Die Extrahierer sind jeweils ausgebildet, wenigstens einen Teil des Texts 310 im Paar 306 aus den Sensordaten aus der Messung 308 aus dem Paar 310 zu extrahieren.

Der Extrahierer wird z.B. aus dem Satz automatisiert insbesondere zufällig ausgewählt.

Beispielsweise werden mehrere Teile des Texts 310 automatisiert mit unterschiedlichen Extrahierern aus dem Satz bestimmt.

Ein Beispiel für einen Algorithmus für automatisiertes Erzeugen des Texts 310 ist:
Input: time-series measurement x i, randomly sampled number of features K, set of feature extractors F
g_i = "This measurement has "
while k < K:
   f = randomly selected feature-extractor from set F
   g_i = concatenate(g_i, f.to_string(x_i))
   k += 1
   Output: g_i

Dabei hat der jeweilige feature extractor F eine Funktion "to_string", die wenigstens einen Teil des Texts ausgibt, der die wenigstens eine Eigenschaft umfasst.

### Möglichkeit 3:

Für ein Paar 306 der Paare wird wenigstens ein Teil des Texts 310 im Paar 306 abhängig von der Messung 308 im Paar 306 mit einem Grundmodell bestimmt.

Das Grundmodell ist ausgebildet, den wenigstens einen Teil des Texts 310 im Paar 306 aus den Sensordaten aus der Messung 308 aus dem Paar 306 zu erzeugen.

Ein Beispiel für das Grundmodell ist GPT-4V. GPT-4V ist in GPT-4V(ision) System Card (https://api.semanticscholar.org/CorpuslD:263218031) beschrieben.

Ein Beispiel für das Grundmodell ist GPT-4o. GPT-4o ist in GPT-4o: Visual perception performance of multimodal large language models in piglet activity understanding (https://arxiv.org/abs/2406.09781) beschrieben.

Ein Beispiel für einen Prompt für das Grundmodell ist
Input: time-series measurement x i, a vision/text foundation model G
prompt = "Describe the plot in this image."
image = plot to_image(x_i)
g_i = G(prompt, image)

Der wenigstens eine Teil des Texts 310 umfasst die Eigenschaft der Sensordaten aus der Messung 308 aus dem Paar 306.

### Möglichkeit 4:

Für eine Messung aus einem Paar 306 der Paare wird eine Logdatei bereitgestellt. Die Logdatei umfasst eine Beschreibung eines Ereignisses, das bei der Erfassung der Messung 310 aus dem Paar 306 auftrat.

Wenigstens ein Teil des Texts 310 im Paar 306 wird abhängig von der Logdatei bestimmt.

Der wenigstens eine Teil des Texts 310 umfasst die Beschreibung des Ereignisses als die Eigenschaft.

Das Verfahren umfasst einen Schritt 404.

Im Schritt 404 wird der erste Kodierer 202 bereitgestellt.

Der erste Kodierer 202 ist dazu ausgebildet, die Messung 308 aus dem jeweiligen Paar 306 auf die Einbettung 312 der Messung 308 im Einbettungsraum 206 abzubilden.

Das Verfahren umfasst einen Schritt 406.

Im Schritt 406 wird der zweite Kodierer 302 bereitgestellt.

Der zweite Kodierer 302 ist dazu ausgebildet, den Text 310 aus dem jeweiligen Paar 306 auf die Einbettung 314 des Texts 310 im Einbettungsraum 206 abzubilden.

Das Verfahren umfasst einen Schritt 408.

Im Schritt 408 werden der erste Kodierer 202 und der zweite Kodierer 302 auf dem Datensatz 304 abhängig von einem Abstand zwischen der Einbettung 312 der Messung 308 und der Einbettung 314 des Textes 310 aus dem jeweiligen Paar 306 trainiert werden.

Das bedeutet, der erste Kodierer 202 wird dazu trainiert, die Messung 308 aus dem jeweiligen Paar 306 auf die Einbettung 312 der Messung 308 abzubilden.

Das bedeutet, der zweite Kodierer 302 wird dazu trainiert, den Text 310 aus dem jeweiligen Paar 306 auf die Einbettung 314 des Textes 310 abzubilden.

Das Verfahren umfasst einen Schritt 410.

Im Schritt 410 wird wenigstens eine zu indexierende Messung 110 bereitgestellt.

Beispielsweise wird ein Satz von zu indexierenden Messungen bereitgestellt.

Das Verfahren umfasst einen Schritt 412.

Im Schritt 412 wird wenigstens eine zu indexierende Messung 110 mit dem trainierten ersten Kodierer 202 auf die Einbettung 108 der wenigstens einen zu indexierenden Messung 110 abgebildet.

Beispielsweise wird mit dem trainierten ersten Kodierer 202 für die zu indexierenden Messungen 110 aus dem Satz von zu indexierenden Messungen die Einbettung 108 der jeweiligen zu indexierenden Messung 110 bestimmt.

Die wenigstens eine zu indexierende Messung 110 wird mit der für die zu indexierende Messung 110 bestimmten Einbettung 108 insbesondere in der Datenbank 112 assoziiert.

Beispielsweise wird die zu indexierende Messung 110 zusammen mit der für die zu indexierende Messung 110 bestimmten Einbettung 108 insbesondere in der Datenbank 112 gespeichert.

Beispielsweise werden die zu indexierenden Messungen 110 aus dem Satz von zu indexierenden Messungen mit der Einbettung 108 der jeweiligen zu indexierenden Messung 110 insbesondere in der Datenbank 112 assoziiert.

Beispielsweise werden die zu indexierenden Messungen 110 aus dem Satz von zu indexierenden Messungen jeweils zusammen mit der Einbettung 108 der jeweiligen zu indexierenden Messung 110 insbesondere in der Datenbank 112 gespeichert.

Die mit der jeweiligen Einbettung assoziierten oder zusammen mit der jeweiligen Einbettung gespeicherten zu indexierenden Messungen 110 stellen zumindest einen Teil eines Satzes von indexierten Messungen dar.

Der Satz von indexierten Messungen kann die Messungen aus dem Datensatz 304 umfassen. Der Satz von indexierten Messungen umfasst z.B. je Paar 306 die Messung 308 aus dem Paar 306 assoziiert mit der für die Messung 308 aus dem Paar 306 bestimmten ersten Einbettung 312.

Das Verfahren umfasst einen Schritt 414.

Im Schritt 414 wird eine Abfrage erfasst.

Die Abfrage umfasst einen Text.

Der Text umfasst eine Eigenschaft von Sensordaten.

Das Verfahren umfasst einen Schritt 416.

Im Schritt 416 wird der Text aus der Abfrage mit dem zweiten Kodierer 302 auf eine Einbettung des Texts aus der Abfrage im Einbettungsraum 206 abgebildet.

Das Verfahren umfasst einen Schritt 418.

Im Schritt 418 wird eine Messung aus dem Satz von indexierten Messungen abhängig vom Abstand zwischen der Einbettung des Texts aus der Abfrage und der für die Messung aus dem Satz der Messungen bestimmten Einbettung 108, 308 der Messung ausgewählt.

Beispielsweise wird die Messung aus dem Satz von indexierten Messungen abhängig vom Abstand zwischen der Einbettung des Texts aus der Abfrage und der mit der Messung insbesondere in der Datenbank 112 assoziierten Einbettung 108, 312 der Messung ausgewählt.

Beispielsweise wird die Messung aus dem Satz von indexierten Messungen ausgewählt, für die der Abstand zwischen der Einbettung des Texts aus der Abfrage und der für die jeweilige Messung bestimmten Einbettung 108, 312 am kleinsten ist.

Es kann vorgesehen sein, eine Messung aus dem Satz von indexierten Messungen zu bestimmen, für die der Abstand zwischen der Einbettung des Texts aus der Abfrage und der für die Messung bestimmten Einbettung 108, 312 kleiner als der Abstand zwischen der Einbettung des Texts aus der Abfrage und der für eine andere Messung aus dem Satz der indexierten Messungen bestimmten Einbettung 108, 312.

Es kann vorgesehen sein, mehrere Messungen aus dem Satz von indexierten Messungen zu bestimmen, für die der Abstand zwischen der Einbettung des Texts aus der Abfrage und der für die jeweilige Messung bestimmten Einbettung 108, 312 kleiner als ein vorgegebener Schwellwert ist.

Ein Beispiel für den ersten Kodierer 202 ist ein Transformer oder ein mehrschichtiges Perzeptron, d.h., ein Multi-Layer-Perceptron (MLP). Das MLP ist z.B. ausgebildet, ein Eingabe in das MLP mit fester Länge auf die Einbettung der Einbettung abzubilden. Die Zeitreihe der Sensordaten wird z.B. durch Hinzufügen von Nullen (zero-padding) auf die Länge verlängert. Der erste Kodierer 202 ist z.B. ein Encoder eines zuvor auf Zeitreihen trainierten Auto-Encoders, z.B. Time2Vec. Time2Vec ist z.B. in Kazemi, Seyed Mehran, et al. "Time2vec: Learning a vector representation of time." arXiv preprint arXiv:1907.05321 (2019), url: https://arxiv.org/pdf/1907.05321.pdf beschrieben.

Ein Beispiel für den zweiten Kodierer 302 ist ein Transformer oder ein MLP.

Der zweite Kodierer 302 ist z.B. ein Text Encoder gemäß CLIP. CLIP ist z.B. in Radford, Alec, et al. "Learning transferable visual models from natural language supervision." International conference on machine learning. PMLR, 2021, url: https://arxiv.org/pdf/2103.00020.pdf beschrieben.

Ein Beispiel für den Extrahierer ist z.B. ein Extrahierer, der eine Merkmalsberechnung umfasst. Die folgende Liste enthält beispielhafte Merkmalsberechnungen:
Merkmalsberechnung 1: Gibt die absolute Energie der Zeitreihe zurück, die die Summe der quadrierten Werte der Zeitreihe ist.
Merkmalsberechnung 2:
   Berechnet den höchsten absoluten Wert der Zeitreihe x.
Merkmalsberechnung 3:
   Gibt die Summe über den absoluten Wert der aufeinanderfolgenden Änderungen in der Reihe x zurück.
Merkmalsberechnung 4:
   Deskriptive Statistik über die Autokorrelation der Zeitreihe.
Merkmalsberechnung 5:
   Berechnet eine lineare Kleinstquadratregression für Werte der Zeitreihe, die über Chunks aggregiert wurden, gegen die Reihenfolge von 0 bis zur Anzahl der Chunks minus eins.
Merkmalsberechnung 6:
   Implementiert einen vektorisierten Algorithmus der Näherungsentropie für die Zeitreihe.
Merkmalsberechnung 7:
   Dieser Merkmalskalkulator passt die unbedingte maximale Wahrscheinlichkeit eines autoregressiven AR(k)-Prozesses an die Zeitreihe an.
Merkmalsberechnung 8:
   Gibt an, ob die Zeitreihe eine Einheitswurzel aufweist oder nicht.
Merkmalsberechnung 9:
   Berechnet die Autokorrelation eines angegebenen Teils der Zeitreihe.
Merkmalsberechnung 10:
   Nützlich für Anwendungen zur Erkennung von Anomalien. Gibt die Korrelation aus der Verteilung der ersten Stelle der Werte der Zeitreihe zurück.
Merkmalsberechnung 11:
   Unterteilt die ersten Werte der Zeitreihe in eine Anzahl äquidistanter Bins.
Merkmalsberechnung 12:
   Verwendet die c3-Statistik zur Messung der Nichtlinearität in der Zeitreihe.
Merkmalsberechnung 13:
   Legt einen Korridor fest, der durch die Quantile ql und qh der Verteilung der Werte der Zeitreihe gegeben ist.
Merkmalsberechnung 14:
   Gibt eine Schätzung für die Komplexität einer Zeitreihe aus. Eine komplexere Zeitreihe hat mehr Spitzen und/oder Täler.
Merkmalsberechnung 15:
   Gibt den Prozentsatz der Werte in der Zeitreihe zurück, die größer als ein vorgegebener Wert sind.
Merkmalsberechnung 16:
   Gibt die Anzahl der Werte in der Zeitreihe wieder, die höher als der Mittelwert der Werte der Zeitreihe sind.
Merkmalsberechnung 17:
   Gibt den Prozentsatz der Werte in der Zeitreihe zurück, die kleiner als ein vorgegebener Wert sind.
Merkmalsberechnung 18:
   Gibt die Anzahl der Werte in der Zeitreihe zurück, die niedriger als der Mittelwert der Werte der Zeitreihe sind.
Merkmalsberechnung 19:
   Berechnet eine kontinuierliche Wavelet-Transformation der Zeitreihe aus, für das Ricker-Wavelet.
Merkmalsberechnung 20:
   Berechnet die Summe der Quadrate von Chunk i aus N Chunks aus der Zeitreihe, ausgedrückt als Verhältnis zur Summe der Quadrate über die gesamte Zeitreihe.
Merkmalsberechnung 21:
   Gibt den spektralen Schwerpunkt (Mittelwert), die Varianz, die Schiefe und die Kurtosis des absoluten Fourier-Transformations-Spektrums der Zeitreihe zurück.
Merkmalsberechnung 22:
   Berechnet für die Zeitreihe die Fourier-Koeffizienten der eindimensionalen diskreten Fourier-Transformation für eine reelle Eingabe mit dem Algorithmus der schnellen Fourier-Transformation
Merkmalsberechnung 23:
   Gibt die erste Stelle des Maximalwerts der Zeitreihe zurück.
Merkmalsberechnung 23:
   Gibt die erste Stelle des Minimalwerts der Zeitreihe zurück.
Merkmalsberechnung 24:
   Berechnet die gebinnte Entropie der Leistungsspektraldichte der Zeitreihe (unter Verwendung der Welch-Methode).
Merkmalsberechnung 25:
   Bestimmt die Koeffizienten des Polynoms für die Zeitreihe, das an die deterministische Dynamik des Langevin-Modells angepasst wurde.
Merkmalsberechnung 26:
   Gibt aus, ob irgendein Wert in der Zeitreihe mehr als einmal vorkommt oder nicht.
Merkmalsberechnung 27:
   Gibt aus, ob der Maximalwert der Zeitreihe mehr als einmal beobachtet wird oder nicht.
Merkmalsberechnung 28:
   Gibt aus, ob der Minimalwert der Zeitreihe mehr als einmal vorkommt oder nicht.
Merkmalsberechnung 29:
   Berechnet den relativen Index i der Zeitreihe, bei dem q% der Masse der Zeitreihe links von i liegt.
Merkmalsberechnung 30:
   Gibt die Wölbung der Zeitreihe zurück (berechnet mit dem angepassten standardisierten Fisher-Pearson-Momentenkoeffizienten G2).
Merkmalsberechnung 31:
   Gibt an, ob die Zeitreihe eine *große* Standardabweichung aufweist oder nicht.
Merkmalsberechnung 32:
   Gibt die relativ letzte Position des Maximalwerts der Zeitreihe zurück.
Merkmalsberechnung 33:
   Gibt die letzte Position des Minimalwerts der Zeitreihe zurück.
Merkmalsberechnung 34:
   Berechnet eine Komplexitätsschätzung auf der Grundlage des Lempel-Ziv-Kompressionsalgorithmus auf der Zeitreihe.
Merkmalsberechnung 35:
   Gibt die Länge der Zeitreihe zurück.
Merkmalsberechnung 36:
   Berechnet eine lineare Kleinstquadratregression für die Werte der Zeitreihe gegenüber der Sequenz von 0 bis Länge der Zeitreihe minus eins.
Merkmalsberechnung 37:
   Berechnet eine lineare Kleinstquadratregression für die Werte der Zeitreihe gegenüber der Folge von 0 bis zur Länge der Zeitreihe minus eins.
Merkmalsberechnung 38:
   Gibt die Länge der längsten aufeinanderfolgenden Teilsequenz in der Zeitreihe zurück, die größer ist als der Mittelwert der Zeitreihe.
Merkmalsberechnung 39:
   Gibt die Länge der längsten aufeinanderfolgenden Teilsequenz in der Zeitreihe zurück, die kleiner als der Mittelwert der Zeitreihe ist
Merkmalsberechnung 40:
   Berechnet das 1-D-Matrixprofil und gibt Tukey's Five Number Set plus den Mittelwert dieses Matrixprofils für die Zeitreihe zurück.
Merkmalsberechnung 41:
   Gbit den größten Fixpunkt der Dynamik geschätzt aus dem Polynom für die Zeitreihe, das an die deterministische Dynamik des Langevin-Modells angepasst wurde.
Merkmalsberechnung 42:
   Berechnet den höchsten Wert der Zeitreihe.
Merkmalsberechnung 43:
   Gibt den Mittelwert der Zeitreihe zurück.
Merkmalsberechnung 44:
   Gibt den Durchschnitt über die ersten Differenzen der Zeitreihe zurück.
Merkmalsberechnung 45:
   Gibt den Mittelwert über die Differenzen der Zeitreihe zurück.
Merkmalsberechnung 46:
   Berechnet das arithmetische Mittel der n absoluten Maximalwerte der Zeitreihe.
Merkmalsberechnung 47:
   Gibt den Mittelwert einer zentralen Approximation der zweiten Ableitung der Zeitreihe zurück.
Merkmalsberechnung 48:
   Liefert den Median der Zeitreihe.
Merkmalsberechnung 49:
   Berechnet den niedrigsten Wert der Zeitreihe.
Merkmalsberechnung 50:
   Berechnet die Anzahl der Überschneidungen der Zeitreihe auf einem vorgegebenen Ausschnitt aus der Zeitreihe.
Merkmalsberechnung 51:
   Berechnet eine Anzahl der Spitzen in der Zeitreihe.
Merkmalsberechnung 52:
   Berechnet die Anzahl der Spitzen mit mindestens einer vorgegebenen Unterstützung n in der Zeitreihe.
Merkmalsberechnung 53:
   Berechnet den Wert der partiellen Autokorrelationsfunktion für die Zeitreihe mit der angegebenen Verzögerung.
Merkmalsberechnung 54:
   Gibt den Prozentsatz der nicht eindeutigen Datenpunkte in der Zeitreihe zurück.
Merkmalsberechnung 55:
   Gibt den Prozentsatz der Werte zurück, die in der Zeitreihe mehr als einmal vorkommen.
Merkmalsberechnung 56:
   Berechnet die Permutationsentropie der Zeitreihe.
Merkmalsberechnung 57:
   Berechnet das q-Quantil der Zeitreihe.
Merkmalsberechnung 58:
   Zählt die beobachteten Werte innerhalb eines vorgegebenen Intervalls [min, max].
Merkmalsberechnung 59:
   Bestimmt das Verhältnis der Werte, die mehr als r mal ein Sigma vom Mittelwert der Zeitreihe entfernt sind.
Merkmalsberechnung 60:
   Gibt einen Faktor zurück, der 1 ist, wenn alle Werte in der Zeitreihe nur einmal vorkommen, und kleiner als 1, wenn dies nicht der Fall ist.
Merkmalsberechnung 61:
   Gibt den quadratischen Mittelwert (rms) der Zeitreihe zurück.
Merkmalsberechnung 62:
   Berechnet die Stichprobenentropie der Zeitreihe.
Merkmalsberechnung 63:
   Gibt die Stichprobenschiefe der Zeitreihe zurück, z.B. berechnet mit dem angepassten standardisierten Fisher-Pearson-Momentenkoeffizienten.
Merkmalsberechnung 64:
   Dieser Funktionsrechner schätzt die Kreuzleistungsspektraldichte der Zeitreihe bei verschiedenen Frequenzen.
Merkmalsberechnung 65:
   Gibt die Standardabweichung der Zeitreihe zurück.
Merkmalsberechnung 66:
   Gibt die Summe aller Datenpunkte zurück, die in der Zeitreihe mehr als einmal vorhanden sind.
Merkmalsberechnung 67:
   Gibt die Summe aller Werte zurück, die in der Zeitreihe mehr als einmal vorkommen.
Merkmalsberechnung 68:
   Berechnet die Summe über die Werte der Zeitreihe.
Merkmalsberechnung 69:
   Gibt den Wert einer Boolesche Variable zurück, die angibt, ob die Verteilung der Werte der Zeitreihe symmetrisch aussieht.
Merkmalsberechnung 70:
   Gibt die Statistik der zeitlichen Umkehrung der Asymmetrie der Zeitreihe zurück.
Merkmalsberechnung 71:
   Zählt das Auftreten von Werten in der Zeitreihe.
Merkmalsberechnung 72:
   Gibt die Varianz der Zeitreihe wieder.
Merkmalsberechnung 73:
   Gibt an, ob die Varianz größer als die Standardabweichung ist oder nicht.
Merkmalsberechnung 74:
   Gibt den Variationskoeffizienten der Zeitreihe zurück, z.B. Standardfehler/Mittelwert, und den relativen Wert der Variation um den Mittelwert der Zeitreihe zurück.

Die in den Möglichkeiten der Merkmalsberechnung angegebenen Werte und Namen von Merkmalen können statt durch Extraktion auch mittels der Nutzereingabe oder durch das Grundmodell oder aus der Logdatei bestimmt werden.

Beispielsweise wird für ein Paar 306 die Nutzereingabe eines Namens eines Merkmals und eines Werts des Merkmals für die Messung 308 aus dem Paar 306 angefordert. Beispielsweise wird für ein Paar 306 das Grundmodell zur Ausgabe eines Namens eines Merkmals und eines Werts des Merkmals für die Messung 308 aus dem Paar 306 aufgefordert. Beispielsweise wird für ein Paar 306 aus der Logdatei der Namen des Merkmals und der Wert des Merkmals für die Messung 308 aus dem Paar 306 gelesen.

## Patentansprüche

1. Computerimplementiertes Verfahren zur Bestimmung einer Einbettung (108) zur Indexierung einer zu indexierende Messung (110) insbesondere in einer Datenbank (112), **dadurch gekennzeichnet, dass** ein Datensatz bereitgestellt wird (402), wobei der Datensatz (304) Paare (306) von je einer Messung (308) und je einem Text (310) umfasst, wobei die Messungen (110, 308) jeweils Sensordaten, insbesondere eine Zeitreihe von Sensordaten umfassen, wobei der Text (310) aus dem jeweiligen Paar (306) wenigstens eine Eigenschaft der Sensordaten in der Messung (308) aus dem jeweiligen Paar (306) beschreibt, wobei ein erster Kodierer (202) bereitgestellt wird (404), wobei ein zweiter Kodierer (302) bereitgestellt wird (406), wobei der erste Kodierer (202) dazu ausgebildet ist, die Messung (308) aus einem jeweiligen Paar (306) auf eine Einbettung (312) der Messung (308) in einem Einbettungsraum (206) abzubilden, wobei der zweite Kodierer (302) dazu ausgebildet ist, den Text (310) aus dem jeweiligen Paar (306) auf eine Einbettung (314) des Texts (310) im Einbettungsraum (206) abzubilden, wobei der erste Kodierer (202) und der zweite Kodierer (302) auf dem Datensatz (304) abhängig von einem Abstand zwischen der Einbettung (312) der Messung (308) und der Einbettung (314) des Textes (310) aus dem jeweiligen Paar (306) trainiert werden (408), die Messung (308) aus dem jeweiligen Paar (306) auf die Einbettung (312) der Messung (308) und den Text (310) aus dem jeweiligen Paar (306) auf die Einbettung (314) des Textes (310) abzubilden, wobei die zu indexierende Messung (110) mit dem trainierten ersten Kodierer (202) auf die Einbettung (108) der zu indexierenden Messung (110) abgebildet wird (412).

2. Das Verfahren nach Anspruch 1, **dadurch gekennzeichnet, dass** für ein Paar (306) der Paare wenigstens ein Teil des Texts (310) im Paar (306) in einer Nutzereingabe erfasst wird (402).

3. Das Verfahren nach einem der vorherigen Ansprüche, **dadurch gekennzeichnet, dass** für ein Paar (306) der Paare wenigstens ein Teil des Texts (310) im Paar (306) abhängig von der Messung (308) im Paar (306) mit einem Extrahierer bestimmt wird (402), wobei der Extrahierer ausgebildet ist, den wenigstens einen Teil des Texts im Paar (306) aus den Sensordaten aus der Messung aus dem Paar zu extrahieren, wobei der wenigstens eine Teil des Texts (310) die Eigenschaft der Sensordaten aus der Messung aus dem Paar (306) umfasst.

4. Das Verfahren nach Anspruch 3, **dadurch gekennzeichnet, dass** ein Satz von Extrahierern bereitgestellt wird (402), wobei die Extrahierer jeweils ausgebildet sind, wenigstens einen Teil des Texts (310) im Paar (306) aus den Sensordaten aus der Messung aus dem Paar (306) zu extrahieren, wobei der Extrahierer aus dem Satz automatisiert insbesondere zufällig ausgewählt wird.

5. Das Verfahren nach Anspruch 4, **dadurch gekennzeichnet, dass** mehrere Teile des Texts (306) automatisiert mit unterschiedlichen Extrahierern aus dem Satz bestimmt werden (402).

6. Das Verfahren nach einem der vorherigen Ansprüche, **dadurch gekennzeichnet, dass** für ein Paar der Paare wenigstens ein Teil des Texts im Paar abhängig von der Messung im Paar mit einem Grundmodell bestimmt wird (402), wobei das Grundmodell ausgebildet ist, den wenigstens einen Teil des Texts im Paar aus den Sensordaten aus der Messung aus dem Paar zu erzeugen, wobei der wenigstens eine Teil des Texts die Eigenschaft der Sensordaten aus der Messung aus dem Paar umfasst.

7. Das Verfahren nach einem der vorherigen Ansprüche, **dadurch gekennzeichnet, dass** für eine Messung aus einem Paar der Paare eine Logdatei bereitgestellt wird, wobei die Logdatei eine Beschreibung eines Ereignisses umfasst, das bei der Erfassung der Messung auftrat, wobei wenigstens ein Teil des Texts im Paar abhängig von der Logdatei bestimmt wird (402), wobei der wenigstens eine Teil des Texts die Beschreibung des Ereignisses als die Eigenschaft umfasst.

8. Das Verfahren nach einem der vorherigen Ansprüche, **dadurch gekennzeichnet, dass** die Einbettung (108) zur Indexierung der zu indexierende Messung (110) und die zu indexierende Messung (110) miteinander assoziiert insbesondere in der Datenbank (112) gespeichert werden.

9. Das Verfahren nach einem der vorherigen Ansprüche, **dadurch gekennzeichnet, dass** ein Satz von Messungen (110) bereitgestellt wird (412), wobei für die Messungen (110) aus dem Satz von Messungen (110) die Einbettung der jeweiligen Messung (110) bestimmt wird (410), wobei eine Abfrage erfasst wird (414), wobei die Abfrage einen Text umfasst, wobei der Text eine Eigenschaft von Sensordaten umfasst, wobei der Text aus der Abfrage mit dem zweiten Kodierer (302) auf eine Einbettung des Texts aus der Abfrage im Einbettungsraum abgebildet wird (416), wobei eine Messung aus dem Satz von Messungen abhängig vom Abstand zwischen der Einbettung des Texts aus der Abfrage und der für die Messung aus dem Satz der Messungen bestimmten Einbettung ausgewählt wird (418).

10. Vorrichtung (100) zur Bestimmung einer Einbettung zur Indexierung einer zu indexierende Messung (110) insbesondere in einer Datenbank (112), **dadurch gekennzeichnet, dass** die Vorrichtung (100) wenigstens einen Prozessor (102) und wenigstens einen Speicher (104) umfasst, wobei der wenigstens eine Prozessor (102) ausgebildet ist, Instruktionen auszuführen, bei deren Ausführung durch den wenigstens einen Prozessor (102) die Vorrichtung (100) das Verfahren nach einem der Ansprüche 1 bis 9 ausführt, wobei der wenigstens eine Speicher (104) die Instruktionen umfasst.

11. Computerprogramm zur Bestimmung einer Einbettung zur Indexierung einer zu indexierende Messung insbesondere in einer Datenbank, **dadurch gekennzeichnet, dass** das Computerprogramm von einem Computer ausführbare Instruktionen umfasst, bei deren Ausführung durch den Computer das Verfahren nach einem der Ansprüche 1 bis 9 abläuft.

12. Datenstruktur zur Bestimmung einer Einbettung (108) zur Indexierung einer zu indexierende Messung (110) insbesondere in einer Datenbank (112), **dadurch gekennzeichnet, dass** die Datenstruktur wenigstens ein Datenfeld für einen Datensatz umfasst, wobei der Datensatz (304) Paare (306) von je einer Messung (308) und je einem Text (310) umfasst, wobei die Messungen (110, 308) jeweils Sensordaten, insbesondere eine Zeitreihe von Sensordaten umfassen, wobei der Text (310) aus dem jeweiligen Paar (306) wenigstens eine Eigenschaft der Sensordaten in der Messung (308) aus dem jeweiligen Paar (306) beschreibt, wobei die Datenstruktur wenigstens ein Datenfeld für einen ersten Kodierer (202) und einen zweiten Kodierer (302) umfasst, wobei der erste Kodierer (202) dazu ausgebildet ist, die Messung (308) aus einem jeweiligen Paar (306) auf eine Einbettung (312) der Messung (308) in einem Einbettungsraum (206) abzubilden, wobei der zweite Kodierer (302) dazu ausgebildet ist, den Text (310) aus dem jeweiligen Paar (306) auf eine Einbettung (314) des Texts (310) im Einbettungsraum (206) abzubilden, wobei die Datenstruktur wenigstens ein Datenfeld zum Trainieren des ersten Kodierers (202) und des zweiten Kodierers (302) auf dem Datensatz (304) dazu umfasst, abhängig von einem Abstand zwischen der Einbettung (312) der Messung (308) und der Einbettung (314) des Textes (310) aus dem jeweiligen Paar (306) die Messung (308) aus dem jeweiligen Paar (306) auf die Einbettung (312) der Messung (308) und den Text (310) aus dem jeweiligen Paar (306) auf die Einbettung (314) des Textes (310) abzubilden, wobei die Datenstruktur wenigstens ein Datenfeld für die Einbettung (108) der zu indexierenden Messung (110) umfasst, auf welche die zu indexierende Messung (110) mit dem trainierten ersten Kodierer (202) abgebildet wird.
